# EUROPÄISCHE PATENTSCHRIFT

(11) **EP 2 949 954 B1**
(45) Veröffentlichungstag und Bekanntmachung des Hinweises auf die Patenterteilung: **14.12.2016**
(21) Anmeldenummer: 15167454.6
(22) Anmeldetag: 13.05.2015
(51) Int. Cl.: F16C 29/08, F16C 29/06

(54) **FÜHRUNGSWAGEN MIT WÄLZKÖRPERFÜHRUNGSTEIL AUS EINEM ELASTOMER**
GUIDE CARRIAGE COMPRISING ROLLER BODY GUIDANCE PART MADE OF AN ELASTOMER
CHARIOT DE GUIDAGE DOTÉ D'UNE PARTIE DE GUIDAGE D'ÉLÉMENT ROULANT CONSTITUÉE D'UN ÉLASTOMÈRE

(30) Priorität: 28.05.2014 DE 102014210180
(43) Veröffentlichungstag der Anmeldung: 02.12.2015
(73) Patentinhaber: ROBERT BOSCH GMBH, 70442 Stuttgart (DE)
(72) Erfinder: Kuehnlein, Richard, 97782 Graefendorf (DE); Kuellstaedt, Wolfgang, 97506 Grafenrheinfeld (DE); Spatschek, Gerd, 97638 Mellrichstadt (DE); Schenk, Juergen, 97478 Knetzgau (DE); Roesch, Gerhard, 97493 Bergrheinfeld (DE); Korbacher, Michael, 97537 Wipfeld (DE); Schierling, Sebastian, 97478 Knetzgau-Oberschwappach (DE); Zeier, Matthias, 97789 Oberleichtersbach (DE); Elting, Martina, 97422 Schweinfurt (DE); Dorn, Stefan, 97450 Arnstein (DE)
(74) Vertreter: Maiß, Harald

(56) Entgegenhaltungen:
- DE-A1-102007 056 862
- JP-A- H09 303 390
- JP-A- 2008 057 755
- JP-A- 2013 079 717

## Beschreibung

Die Erfindung betrifft einen Führungswagen gemäß dem Oberbegriff von Anspruch 1.

Aus der DE 10 2007 056 862 A1 ist ein Führungswagen bekannt, welcher zur Verwendung mit einer langgestreckten Führungsschiene vorgesehen ist. Der Führungswagen umfasst vier Reihen von rollenförmigen Wälzkörpern, die jeweils in einem zugeordneten endlosen Umlaufkanal aufgenommen sind, wobei die vorliegende Erfindung auch für kugelförmige Wälzkörper verwendbar ist. Jeder Umlaufkanal umfasst einen Tragabschnitt und einen Rücklaufkanal, welche an beiden gegenüberliegenden Enden über je einen gebogenen Umlenkkanal miteinander verbunden sind. Der Tragabschnitt wird von einer Wagenlaufbahn an dem Führungswagen und einer Schienenlaufbahn an der Führungsschiene begrenzt, welche sich jeweils in eine Längsrichtung erstrecken. Alle Umlenkkanäle sind innerhalb zweier gesonderter Endkappen angeordnet, welche an den beiden gegenüberliegenden Längsstirnflächen des Hauptkörpers des Führungswagens befestigt sind.

Weiter sind insgesamt vier sich in Längsrichtung erstreckende Längsdichtungen vorgesehen, welche aus einem Elastomer bestehen. Die beiden unteren Längsdichtungen sind jeweils als gesonderte Bauteile ausgebildet. Sie sind jeweils an ihren beiden gegenüberliegenden Enden mit einer Verdickung versehen, über die sie in die beiden Endkappen eingehakt sind, so dass sie unter Zugspannung gesetzt sind.

Gemäß einer weiteren Ausführungsform der DE 10 2007 056 862 A1 sind die Längsdichtungen einstückig mit einem Haltevorsprung ausgebildet, der die Wälzkörper im Führungswagen hält, wenn sich dieser nicht auf der Führungsschiene befindet. Das entsprechende Bauteil ist aus einem harten Kunststoff wie Polyamid ausgebildet. Die Längsdichtung hat daher eine schlechtere Dichtwirkung wie die obige Längsdichtung aus einem Elastomer.

Aus der US 6 305 846 B1 ist darüber hinaus ein Führungswagen mit vier Reihen von kugelförmigen Wälzkörpern bekannt. Der Führungswagen hat ein einziges Wälzkörperführungsteil mit zwei Umlenkabschnitten, zwischen denen insgesamt acht Führungsabschnitte vorgesehen sind, die sich in Längsrichtung erstrecken. Das Wälzkörperführungsteil besteht aus einem harten Kunststoff und hat keine Längsdichtlippen.

Aus der JP 2008 057755 A, dass die Merkmale des Oberbegriffs des Anspruchs 1 offenbart, ist ein Führungswagen bekannt, bei dem die Längsdichtlippen, die Führungsabschnitte und die radial inneren Umlenkoberflächen jeweils an gesonderten Bauteilen ausgebildet sind. Weitere Führungswägen sind aus der DE 10 2007056 862 A1, der JP 2013 079717 A und der JP H09 303390 A bekannt.

Der Vorteil der vorliegenden Erfindung liegt darin, dass der Führungswagen sehr wenige Bauteile aufweist und damit kostengünstig herstellbar ist. Weiter hat die Längsdichtlippe eine gute Dichtwirkung
Gemäß dem selbständigen Anspruch wird vorgeschlagen, dass wenigstens ein gesondertes Wälzkörperführungsteil vorgesehen ist, welches einstückig aus einem Elastomer besteht, wobei das Wälzkörperführungsteil zwei Umlenkabschnitte aufweist, zwischen denen wenigstens ein sich in Längsrichtung erstreckender Führungsabschnitt angeordnet ist, wobei an dem Führungsabschnitt eine zugeordnete Längsdichtlippe zumindest abschnittsweise angeordnet ist, wobei an den zwei Umlenkabschnitten jeweils wenigstens eine radial innere Umlenkoberfläche eines Umlenkkanals angeordnet ist. Die Längsdichtung hat eine gute Dichtwirkung, da sie aus einem Elastomer besteht. Unter einem Elastomer soll dabei vorzugsweise ein elastisch verformbarer Kunststoff verstanden werden, dessen Glasübergangspunkt unterhalb der Umgebungstemperatur liegt. Höchst vorzugsweise besteht der Dichtrahmen aus thermoplastischem Ether Ester Elastomer (TEEE, Handelsname "Hytrel"). Die angesprochene radiale Richtung wird durch die Krümmung des gebogenen Umlenkkanals definiert. Die Führungsabschnitte haben vorzugsweise über ihre gesamte Länge eine konstante Querschnittsform.

In den abhängigen Ansprüchen sind vorteilhafte Weiterbildungen und Verbesserungen der Erfindung angegeben.

Es ist bevorzugt, dass zwei Endkappen vorgesehen sind, an denen wenigstens eine radial äußere Umlenkoberfläche eines Umlenkkanals angeordnet ist, wobei die beiden Umlenkabschnitte des wenigstens einen Wälzkörperführungsteils jeweils in einer zugeordneten Endkappe aufgenommen sind. Die Endkappen liegen vorzugsweise an einer zugeordneten zweiten Längsstirnfläche eines Hauptkörpers an.

Es ist bevorzugt, dass die Längsdichtlippe an dem wenigstens einen Führungsabschnitt in einer Flucht an wenigstens einer Endkappe fortgesetzt ist. Der Führungsabschnitt erstreckt sich nur über die Länge des Hauptkörpers. Im Bereich der Endkappen verbleibt also ein Bereich, der nicht durch die Längsdichtung an den Führungsabschnitten abgedichtet werden kann. Dieses Problem wird durch die vorstehende Lösung vermieden, bei der ein Teil der Längsdichtlippe an der Endkappe vorgesehen ist. Vorzugsweise wird die Längsdichtlippe an beiden Endkappen fluchtend fortgesetzt.

Es ist bevorzugt, dass parallel zur Längsdichtlippe ein Haltevorsprung an dem wenigstens einen Führungsabschnitt angeordnet ist, wobei der Haltevorsprung dazu ausgebildet ist, die zugeordneten Wälzkörper im Führungswagen zu halten, wenn sich dieser nicht auf der Führungsschiene befindet. Hierdurch kann der angesprochene Wälzkörperhalt realisiert werden, ohne dass zusätzliche Bauteile erforderlich sind.

Es ist bevorzugt, dass das wenigstens eine Wälzkörperführungsteil genau zwei Führungsabschnitte aufweist, wobei die beiden Umlenkabschnitte jeweils zwei radial innere Umlenkoberflächen aufweisen, die zwischen den beiden Führungsabschnitten angeordnet sind. Das genannte Wälzkörperführungsteil lässt sich besonders einfach an dem Hauptkörper des Führungswagens montieren. Vorzugsweise hat der Führungswagen insgesamt vier Reihen von Wälzkörpern, wobei er zwei identische Wälzkörperführungsteile für jeweils zwei Reihen von Wälzkörpern aufweist.

Es ist ein gesonderter Hauptkörper aus Metall vorgesehen, wobei die Wagenlaufbahn an einer gesonderten Laufbahneinlage angeordnet ist, wobei die Laufbahneinlage zwei gegenüberliegende erste Längsstirnflächen aufweist, die an einem zugeordneten Umlenkabschnitt des wenigstens einen Wälzkörperführungsteils anliegen. Die Laufbahneinlagen können unmittelbar auf dem Hauptkörper lose aufliegen, wobei sie allein durch die Vorspannkraft der Wälzkörper gegen den Hauptkörper gedrückt werden. Es ist aber auch denkbar, die Laufbahneinlagen stoffschlüssig am Hauptkörper zu befestigen, insbesondere zu verkleben. Durch die vorgeschlagene Anlage der ersten Längsstirnflächen an den zugeordneten Umlenkabschnitt wird ein störungsfreier und geräuscharmer Ablauf der Wälzkörper im Führungswagen erreicht. Die ersten Längsstirnflächen sind vorzugsweise eben ausgebildet, wobei sie senkrecht zur Längsrichtung ausgerichtet sind. Das angesprochene Metall ist vorzugsweise ungehärteter Stahl. Der Rücklaufkanal ist vorzugsweise unmittelbar im Hauptkörper angeordnet, wobei die Wälzkörper Kugeln sind. Die Laufbahneinlage besteht vorzugsweise aus gehärtetem Stahl.

Es ist bevorzugt, dass der Hauptkörper zwei gegenüberliegende zweite Längsstirnflächen aufweist, wobei die Laufbahneinlage mit wenigstens einer ersten Längsstirnfläche in Längsrichtung über eine zugeordnete zweite Längsstirnfläche des Hauptkörpers übersteht. Die Tragfähigkeit und die Steifigkeit des Führungswagens werden in erster Linie durch die Länge der Wagenlaufbahn bestimmt. Diese kann mit den vorgeschlagenen Merkmalen bei vorgegebenen Außenabmessungen des Führungswagens besonders groß ausgebildet werden. Die zweiten Längsstirnflächen sind vorzugsweise eben ausgebildet, wobei sie senkrecht zur Längsrichtung ausgerichtet sind. Vorzugsweise stehen alle ersten Längsstirnflächen über die zugeordneten zweiten Längsstirnflächen über.

Es ist bevorzugt, dass die Umlenkabschnitte jeweils mit einer Anlagefläche an einer zugeordneten zweiten Längsstirnfläche anliegen, wobei die Laufbahneinlage in eine angepasste Ausnehmung des Umlenkabschnitts eingreift. Vorzugsweise liegt die Laufbahneinlage lose am Hauptkörper an, wobei sie während der Montage des Führungswagens vom Wälzkörperführungsteil am Hauptkörper gehalten wird. Die Anlagefläche ist vorzugsweise eben ausgebildet, wobei sie senkrecht zur Längsrichtung ausgerichtet ist.

Es ist vorgesehen, dass die Laufbahneinlage unter Vorspannung zwischen den Umlenkabschnitten des zugeordneten Wälzkörperführungsteils aufgenommen ist. Hierdurch werden die Führungsabschnitte aus Elastomer unter Zugspannung gesetzt. Damit ist sichergestellt, dass die vergleichsweise elastischen Führungsabschnitte ihre Form behalten, wenn äußere Kräfte auf sie einwirken. Dies ist insbesondere der Fall, wenn die Haltevorsprünge an den Führungsabschnitten die Wälzkörper am Herausfallen aus dem Führungswagen hindern sollen. Weiter kann die Baugruppe aus Wälzkörperführungsteil und Laufbahneinlage vormontiert werden, wobei sie durch die vorgeschlagene Vorspannung auch dann zusammenhält, wenn sie am Hauptkörper montiert wird. Vorzugsweise ist der Abstand der Umlenkabschnitte am unverformten, nicht montierten Wälzkörperführungsteil kleiner als die Länge der Laufbahneinlagen.

Es ist bevorzugt, dass der Hauptkörper unter Vorspannung zwischen den Umlenkabschnitten des Wälzkörperführungsteils aufgenommen ist. Die Führungsabschnitte werden vorzugsweise in erster Linie durch die Laufbahneinlage unter Zug gesetzt. Die Vorspannung durch den Hauptkörper dient der Vereinfachung der Montage, damit das Wälzkörperführungsteil während der Montage am Hauptkörper reibschlüssig gehalten wird. Dies hat zur Folge, dass die unten angesprochenen plattenartigen Abschnitte vom Hauptkörper weg klaffen. Sie werden jedoch beim Anschrauben der Endkappe im Wesentlichen spaltfrei gegen den Hauptkörper gedrückt.

Es ist bevorzugt, dass jeder radial inneren Umlenkoberfläche ein kreisrunder Durchbruch in dem Umlenkabschnitt zugeordnet ist, der Bestandteil des Umlaufkanals ist. Vorzugsweise ist um den kreisrunden Durchbruch herum ein ringförmiger Ausrichtvorsprung am Wälzkörperführungsteil vorgesehen, der in eine angepasste Ausrichtausnehmung am Rücklaufkanal eingreift.

Es ist bevorzugt, dass der Umlenkabschnitt im Bereich des kreisrunden Durchbruchs in Form einer ebenen Platte mit konstanter Dicke ausgebildet ist.

Es ist bevorzugt, dass die Dicke der ebenen Platte größer als der Überstand der ersten Längsstirnfläche über die zweite Längsstirnfläche ist. Hierdurch wird erreicht, dass die Umlenkabschnitte eine genügend große Steifigkeit aufweisen, damit sie sich unter Einwirkung der Vorspannung durch die Laufbahneinlage und den Hauptkörper nicht übermäßig verformen.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine Explosionsansicht eines erfindungsgemäßen Führungswagens;
- Fig. 2: einen Querschnitt des Führungswagens nach Fig. 1 mit der zugeordneten Führungsschiene;
- Fig. 3: eine Teilschnittansicht des Führungswagens nach Fig. 1, wobei die Schnittebene durch die Wälzkörpermittelpunkte einer Reihe von Wälzkörpern verläuft;
- Fig. 4: eine perspektivische Teilansicht des Wälzkörperführungsteils im Bereich der radial inneren Umlenkoberflächen;
- Fig. 5: einen vergrößerten Ausschnitt von Fig. 2 im Bereich eines Führungsabschnitts;
- Fig. 6: eine perspektivische Ansicht des Führungswagens nach Fig. 1; und
- Fig. 7: einen vergrößerten Ausschnitt von Fig. 6 im Bereich einer Verlängerung der Längsdichtlippe.

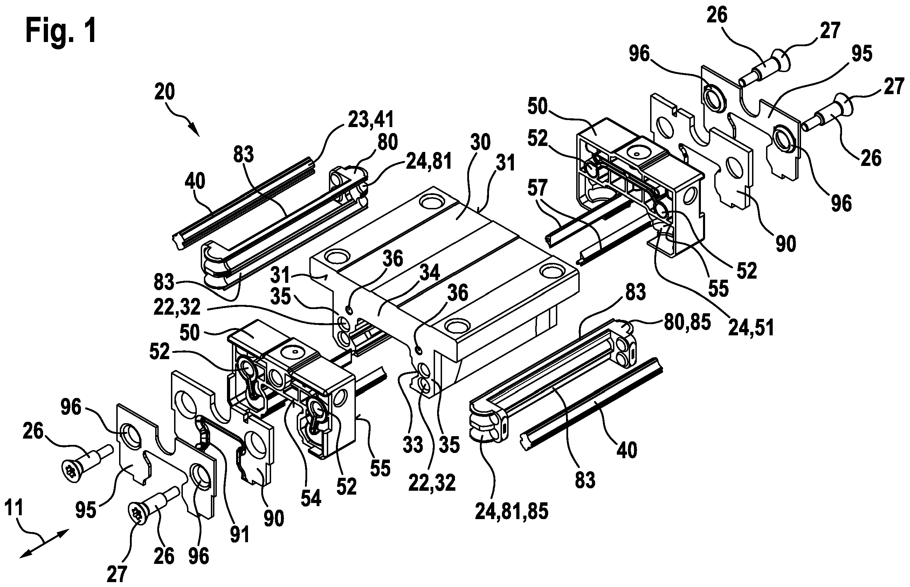

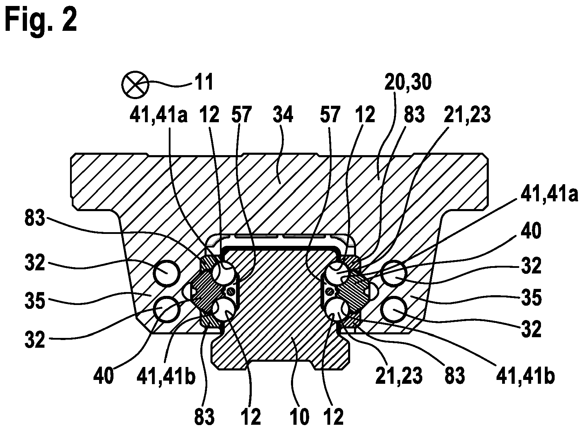

Fig. 1 zeigt eine Explosionsansicht eines erfindungsgemäßen Führungswagens 20. Der Führungswagen 20 umfasst einen Hauptkörper 30 aus ungehärtetem Stahl, der sich mit einer im Wesentlichen konstanten, U-förmigen Querschnittsform in eine Längsrichtung 11 erstreckt. An der Innenseite der U-Schenkel 35 ist jeweils eine V-förmige Nut 33 angeordnet, an der jeweils eine gesonderte Laufbahneinlage 40 anliegt, welche aus gehärtetem Wälzlagerstahl besteht. Die beiden Laufbahneinlagen 40 erstrecken sich mit einer im Wesentlichen konstanten Querschnittsform in Längsrichtung 11, wobei sie jeweils zwei Wagenlaufbahnen 41a; 41b aufweisen, so dass der Führungswagen 20 insgesamt vier Reihen von Wälzkörpern (Nr. 21 in Fig. 2) hat.

An den beiden gegenüberliegenden, ebenen Längsstirnflächen 31 des Hauptkörpers 30 liegt je eine Endkappe 50 mit einer inneren Längsstirnseite 55 unmittelbar an. Die beiden Endkappen 50 sind identisch ausgebildet, wobei sie aus Kunststoff im Spritzgussverfahren hergestellt sind. Für jede der vier Wälzkörperreihen ist in den beiden Endkappen 50 je eine radial äußere Umlenkoberfläche 51 eines gebogenen Umlenkkanals 24 vorgesehen. In die Endkappe 50 sind jeweils zwei zugeordnete Enden der beiden Wälzkörperführungsteile 80 eingesetzt, an denen die radial inneren Umlenkoberflächen 81 der gebogenen Umlenkkanäle 24 vorgesehen sind.

Zwischen den gebogenen Umlenkkanälen 24 in den gegenüberliegenden Endkappen 50 verläuft ein Rücklaufkanal 32, der vorliegend unmittelbar im Hauptkörper 30 in Form einer kreisrunden Bohrung ausgebildet ist, welche an ihren beiden Enden mit einer Kegelsenkung versehen ist. Die vorliegende Erfindung ist aber auch für Führungswägen verwendbar, bei denen der Rücklaufkanal in einem gesonderten Rücklaufrohr oder außen am Hauptkörper ausgebildet ist.

In den Endkappen 50 sind je zwei kreisrunde Befestigungsbohrungen 52 angeordnet, welche sich in Längsrichtung 11 erstrecken. Die Befestigungsbohrungen 52 werden jeweils von einer zugeordneten Befestigungsschraube 26 durchsetzt, welche endseitig ein Außengewinde aufweist, welches in ein zugeordnetes Innengewinde 36 im Hauptkörper 30 eingeschraubt ist. Das Innengewinde 36 ist in etwa im Bereich des Übergangs zwischen der Basis 34 und einem zugeordneten U-Schenkel 35 des Hauptkörpers 30 angeordnet, damit die beiden Befestigungsschrauben 26 die zugeordnete Endkappe 50 über die gesamte innere Längsstirnfläche 55 gleichmäßig an die Längsstirnfläche des Hauptkörpers 30 andrücken.

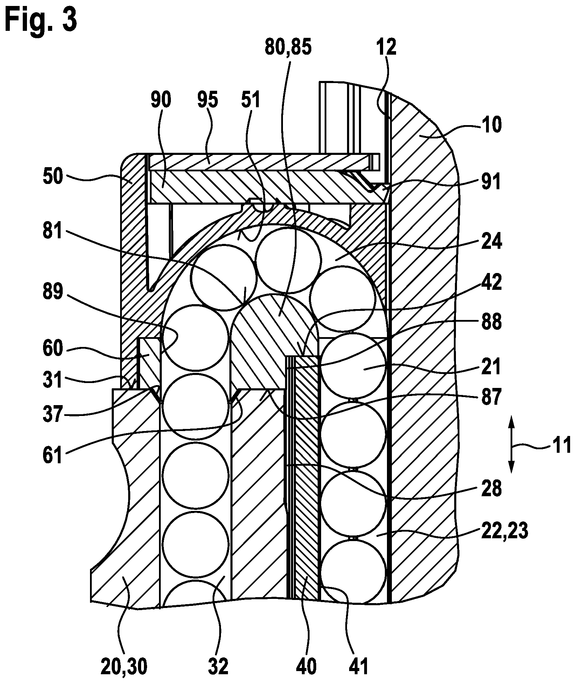

Auf der äußeren Längsstirnfläche 54 der Endkappe 50 liegt jeweils eine U-förmige Enddichtung 90 auf, welche im Wesentlichen als ebene Platte mit konstanter Dicke ausgebildet ist, wobei sie aus einem Elastomer, insbesondere thermoplastischem Ether Ester Elastomer (TEEE, Handelsname "Hytrel") besteht. Die Enddichtung 90 ist mit einer Enddichtlippe 91 versehen, welche dichtend an der Führungsschiene (Nr. 10 in Fig. 3) anliegt.

Außen auf der Enddichtung 90 liegt wiederum jeweils ein U-förmiges Abstreifblech 95 auf, welches in Form einer ebenen Platte mit konstanter Dicke ausgebildet ist, wobei es aus nichtrostendem Stahl besteht. Das Abstreifblech 95 ist mit geringem Abstand äquidistant zur Führungsschiene ausgebildet, so dass es Fremdkörper, beispielsweise Metallspäne, von dieser abstreifen kann. Die Befestigungsschrauben 26 durchsetzen sowohl das Abstreifblech 95 als auch die Enddichtung 90. Dabei liegt ein kegelförmiger Kopf 27 der Befestigungsschraube 26 an einer tiefgezogenen kegelförmigen Senkung 96 an dem Abstreifblech 95 an. Die Senkung 96 ist dabei so genau an den Kopf 27 angepasst, dass über den gesamten Umfang eine fluiddichte Berührung gegeben ist, damit dort kein Schmiermittel austritt. Der Kopf 27 der Befestigungsschraube 26 ist mit einem Torx-Profil zum Eingriff eines Schraubwerkzeugs versehen. Am Grund des Torx-Profils ist ein Innengewinde in der Befestigungsschraube 26 angeordnet, um beispielsweise einen Messkopf entsprechend der DE 10 2006 027 061 B4 am Führungswagen 20 zu befestigen.

Weiter ist noch auf die Wälzkörperhaltestege 57 hinzuweisen, welche einstückig an den Endkappen 50 ausgebildet sind, wobei sie sich zwischen die U-Schenkel 35 des Hauptkörpers 30 erstrecken. Die Wälzkörperhaltestege 57 der beiden Endkappen 50 erstrecken sich zusammen lückenlos über die gesamte Länge des Hauptkörpers 30.

Fig. 2 zeigt einen Querschnitt des Führungswagens 20 nach Fig. 1 mit der zugeordneten Führungsschiene 10. Die Schnittebene verläuft dabei senkrecht zur Längsrichtung 11 in der Mitte des Hauptkörpers 30.

Die Führungsschiene 10 besteht aus Stahl und ist im Bereich der Schienenlaufbahnen 12 randschichtgehärtet. Sie erstreckt sich mit der dargestellten konstanten Querschnittsform gerade entlang der Längsrichtung 11. An der Führungsschiene 10 sind insgesamt vier Schienenlaufbahnen 12 angeordnet, die zusammen mit den gegenüberliegenden Wagenlaufbahnen 41 den Tragabschnitt 23 des endlosen Umlaufkanals begrenzen. Die Schienen- und die Wagenlaufbahnen 12; 41 sind im Querschnitt betrachtet kreisförmig ausgebildet, wobei sie mit einer engen Schmiegung an die kugelförmigen Wälzkörper 12 angepasst sind. Weiter ist auf den Wälzkörperhaltesteg 57 hinzuweisen, der die Wälzkörper 21 zusammen mit den Führungsabschnitten 83 der Wälzkörperhalteteile im Führungswagen 20 hält, wenn sich dieser nicht auf der Führungsschiene 10 befindet.

Der vorliegende Führungswagen 20 hat vier Reihen von endlos umlaufenden Wälzkörpern 21, welche in einer sogenannten O-Anordnung belastet werden.

Fig. 3 zeigt eine Teilschnittansicht des Führungswagens 20 nach Fig. 1, wobei die Schnittebene durch die Wälzkörpermittelpunkte einer Reihe von Wälzkörpern 21 verläuft. Die nachfolgenden Ausführungen gelten für alle vier Wälzkörperumläufe an beiden Enden des Wälzkörperumlaufs.

Die Laufbahneinlage 40 liegt unmittelbar an dem Hauptkörper 30 an, wobei sie lose auf diesem aufliegt. Eine stoffschlüssige Verbindung ist nicht vorgesehen, d.h. die Laufbahneinlage 40 wird allein durch die Vorspannkraft der Wälzkörper 21 gegen den Hauptkörper 30 gedrückt. Der Hauptkörper 30 hat eine ebene zweite Längsstirnfläche 31, welche sich senkrecht zur Längsrichtung 11 erstreckt. Die Laufbahneinlage 40 hat eine ebene erste Längsstirnfläche 42, welche sich senkrecht zur Längsrichtung 11 erstreckt. Die Laufbahneinlage 40 steht mit der ersten Längsstirnfläche 42 in Längsrichtung 11 über die zweite Längsstirnfläche 31 des Hauptkörpers 30 über. Im Bereich der zweiten Längsstirnfläche 31 ist ein Spalt 28 zwischen dem Hauptkörper 30 und der Laufbahneinlage 40 vorgesehen, so dass die Laufbahneinlage 40 dort nicht durch den Hauptkörper 30 abgestützt ist. Sie verbiegt sich vielmehr unter der Vorspannkraft der Wälzkörper 21, so dass letztgenannte sanft in den tragenden Bereich einlaufen.

Weiter ist in Fig. 3 ein Ende des Wälzkörperführungsteils 80 zu erkennen, wobei wegen der Schnittführung allein der Umlenkabschnitt 85 zu sehen ist. An dem Umlenkabschnitt 85 sind die radial inneren Umlenkoberflächen 81 vorgesehen, welche zusammen mit den radial äußeren Umlenkoberflächen 51 an der Endkappe den gebogenen Umlenkkanal 24 begrenzen.

Weiter ist an dem Umlenkabschnitt 85 ein Unterabschnitt 60 vorgesehen, der in Form einer ebenen Platte mit konstanter Dicke ausgebildet ist. Die Dicke der ebenen Platte 60 ist größer als der Überstand der Laufbahneinlage 40 über den Hauptkörper 30. In der ebenen Platte 60 ist ein kreisrunder Durchbruch 89 vorgesehen, der Bestandteil des Umlaufkanals 22 ist. Der kreisrunde Durchbruch 89 ist fluchtend zum Rücklaufkanal 32 ausgebildet, der unmittelbar im Hauptkörper 30 in Form einer kreisrunden Bohrung vorgesehen ist. Am Ende des Rücklaufkanals 32 ist eine Ausrichtausnehmung 37 in Form einer Kegelsenkung angebracht. An der ebenen Platte 60 des Wälzkörperteils ist ein angepasster Ausrichtvorsprung 61 einstückig vorgesehen, welcher die kreisrunde Bohrung 89 ringförmig umgibt. Die ebene Platte 60 liegt mit einer ebenen Anlagefläche 87 unmittelbar an der zweite Längsstirnfläche 31 an. Hierbei ist anzumerken, dass der Abstand der beiden Anlageflächen 87 am separaten, unverformten Wälzkörperführungsteil 80 etwas kleiner ist als die Länge des Hauptkörpers 30, welche zwischen seinen beiden zweiten Längsstirnflächen 31 gemessen wird. Der Hauptkörper 30 ist also unter Vorspannung zwischen den Umlenkabschnitten 85 aufgenommen, wodurch vor allem die Führungsabschnitte (Nr. 83 in Fig. 2) gedehnt werden, da sie deutlich elastischer sind als der Hauptkörper 30. Hierdurch wird erreicht, dass das Wälzkörperführungsteil 80 während der Montage des Führungswagens 20 reibschlüssig am Hauptkörper 30 gehalten wird.

Weiter ist auf die Ausnehmung 88 in dem Umlenkabschnitt 85 des Wälzkörperführungsteils 80 hinzuweisen, in welcher der über den Hauptkörper 30 überstehende Teil der Laufbahneinlage 40 aufgenommen ist. Dabei liegt die erste Längsstirnfläche 42 der Laufbahneinlage 40 unter Vorspannung an der zugeordneten ebenen Seitenfläche der Ausnehmung 88 an. Bei der Montage des Führungswagens 20 werden zuerst die Laufbahneinlagen 40 in das zugeordnete Wälzflächenteil 80 eingesetzt. Aufgrund der vorgenannten Vorspannung werden hierdurch die Führungsabschnitte (Nr. 83 in Fig. 2) unter Zugspannung gesetzt, so dass sie straff gespannt sind. Diese Baugruppe ist so ausgelegt, dass sie als Ganzes auf den Hauptkörper 30 aufgesetzt werden kann, wobei sich der oben beschriebene reibschlüssige Halt zwischen den Anlageflächen 87 und den zweiten Längsstirnflächen 31 ergibt.

Hinzuweisen ist noch auf die Enddichtung 90, die in Form einer ebenen Platte ausgebildet ist, wobei sie eine Enddichtlippe 91 hat, welche an der Führungsschiene 10 gleitend anliegt. Die Enddichtung 90 liegt außen auf der Endkappe 50 auf, wobei sie von einem Abstreifblech 95 überdeckt wird, welches mit geringem Abstand äquidistant zur Führungsschiene 10 ausgebildet ist.

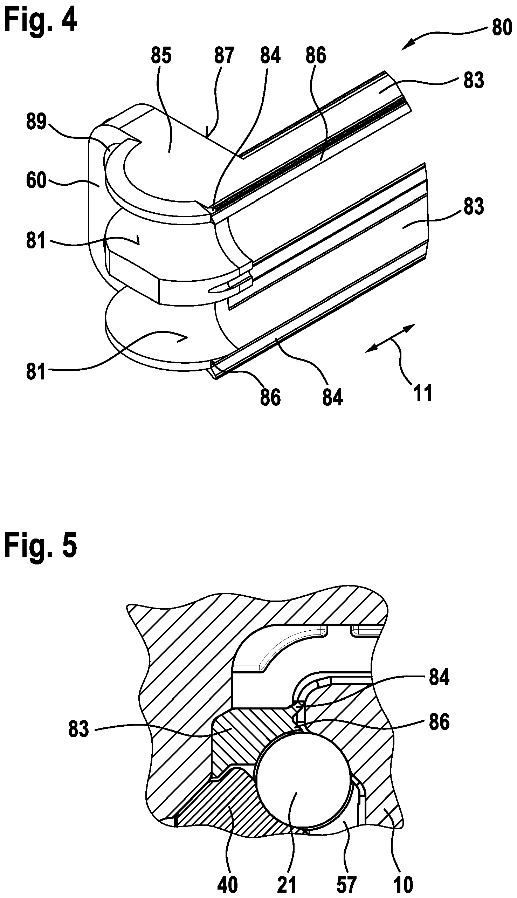

Fig. 4 zeigt eine perspektivische Teilansicht des Wälzkörperführungsteils 80 im Bereich der radial inneren Umlenkoberflächen 81. Einem Wälzkörperführungsteil 80 sind zwei parallel laufende Reihen von Wälzkörpern zugeordnet. Es weist daher an beiden Enden zwei radial innere Umlenkoberflächen 81 des Umlenkkanals auf, die bezüglich einer gemeinsamen Krümmungsachse mit dem gleichen Radius kreisförmig gebogen verlaufen.

Weiter sind an dem Wälzkörperführungsteil 80 zwei parallele Führungsabschnitte 83 einstückig vorgesehen, welche mit einer konstanten Querschnittsform in Längsrichtung 11 verlaufen. An den Führungsabschnitten 83 ist jeweils eine Längsdichtlippe 84 vorgesehen, welche dichtend an der Führungsschiene anliegt, wenn der Führungswagen auf dieser montiert ist. Weiter halten die Führungsabschnitte 83 die Wälzkörper im Führungswagen, wenn sich dieser nicht auf der Führungsschiene befindet.

Das Wälzkörperführungsteil 80 ist spiegelsymmetrisch bezüglich einer ersten Symmetrieebene ausgebildet, welche senkrecht zur Krümmungsachse der gebogenen Umlenkkanäle verläuft. Darüber hinaus ist es spiegelsymmetrisch zu einer zweiten Symmetrieebene ausgebildet, die senkrecht zur Längsrichtung 11 verläuft. Das Wälzkörperführungsteil 80 ist einstückig ausgebildet, wobei es aus einem Elastomer, vorzugsweise aus thermoplastischem Ether Ester Elastomer (TEEE, Handelsname "Hytrel"), besteht.

Der Umlenkabschnitt 86 des Wälzkörperführungsteils 80 weist neben den radial inneren Umlenkoberflächen 81 einen Unterabschnitt 60 auf, der in Form einer ebenen Platte mit konstanter Dicke ausgeführt ist. Dort sind zwei kreisrunde Durchbrüche 89 vorgesehen, welche die ebene Platte 60 in Längsrichtung 11 durchsetzen. Dabei ist jeder radial inneren Umlenkoberfläche 81 ein kreisrunder Durchbruch 89 zugeordnet.

Fig. 5 zeigt einen vergrößerten Ausschnitt von Fig. 2 im Bereich eines Führungsabschnitts 83. Zu erkennen ist einerseits der Haltevorsprung 86 an dem Führungsabschnitt 83, der die Wälzkörper 21 zusammen mit dem Wälzkörperhaltsteg 57 der Endkappen im Führungswagen hält, wenn sich letztgenannter nicht auf der Führungsschiene befindet. Weiter ist die Längsdichtlippe 84 zu erkennen, welche parallel beabstandet zu dem Haltevorsprung 86 verläuft.

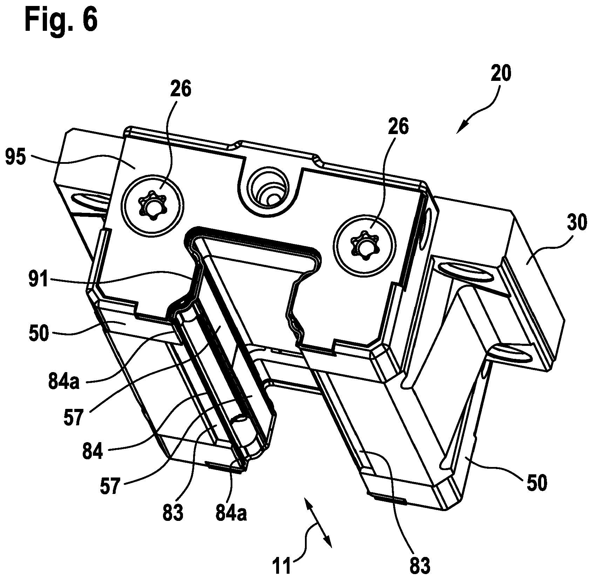

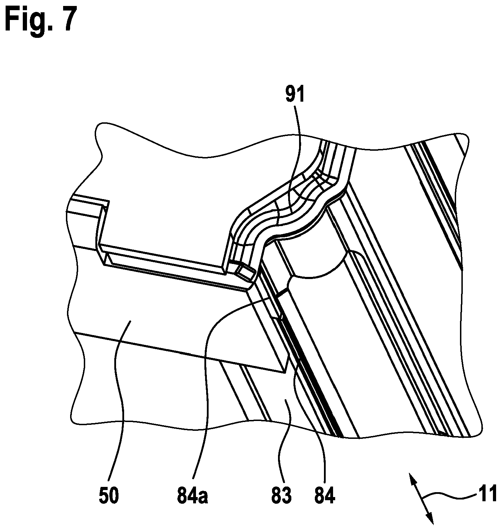

Fig. 6 zeigt eine perspektivische Ansicht des Führungswagens 20 nach Fig. 1, wobei Fig. 7 einen vergrößerten Ausschnitt von Fig. 6 im Bereich einer Verlängerung 84a der Längsdichtlippe 84 zeigt.

Die Längsdichtlippe 84 an dem Führungsabschnitt 83 erstreckt sich bezüglich der Längsrichtung 11 etwas in die Endkappe 50 hinein. Im Übrigen wird sie durch die Verlängerung 84a, die einstückig an der Endkappe 50 vorgesehen ist, in einer Flucht bis zur Enddichtlippe 91 fortgesetzt. Dementsprechend umschließen die Längsdichtlippen 84 zusammen mit den Enddichtlippen 91 alle Wälzkörperumläufe unterbrechungsfrei.

### Bezugszeichenliste

- 10: Führungsschiene
- 11: Längsrichtung
- 12: Schienenlaufbahn

- 20: Führungswagen
- 21: Wälzkörper
- 22: Umlaufkanal
- 23: Tragabschnitt
- 24: Umlenkkanal
- 26: Befestigungsschraube
- 27: Kopf der Befestigungsschraube
- 28: Spalt zwischen Laufbahneinlage und Hauptkörper

- 30: Hauptkörper
- 31: zweite Längsstirnfläche
- 32: Rücklaufkanal
- 33: V-förmige Nut
- 34: Basis
- 35: U-Schenkel
- 36: Innengewinde
- 37: Ausrichtausnehmung

- 40: Laufbahneinlage
- 41: Wagenlaufbahn
- 41 a: erste Wagenlaufbahn
- 41b: zweite Wagenlaufbahn
- 42: erste Längsstirnfläche

- 50: Endkappe
- 51: radial äußere Umlenkoberfläche
- 52: Befestigungsbohrung
- 54: äußere Längsstirnfläche der Endkappe
- 55: innere Längsstirnfläche der Endkappe
- 57: Wälzkörperhaltesteg

- 60: ebene Platte
- 61: ringförmiger Ausrichtvorsprung

- 80: Wälzkörperführungsteil
- 81: radial innere Umlenkoberfläche
- 83: Führungsabschnitt
- 84: Längsdichtlippe
- 84a: Verlängerung der Längsdichtlippe
- 85: Umlenkabschnitt
- 86: Haltevorsprung
- 87: Anlagefläche
- 88: Ausnehmung
- 89: kreisrunder Durchbruch

- 90: Enddichtung
- 91: Enddichtlippe

- 95: Abstreifblech
- 96: Senkung

## Patentansprüche

1. Führungswagen (20) zur Verwendung mit einer langgestreckten Führungsschiene (10), wobei der Führungswagen (20) wenigstens eine Reihe von Wälzkörpern (21) aufweist, die in einem zugeordneten Umlaufkanal (22) aufgenommen sind, wobei der Umlaufkanal (22) einen Tragabschnitt (23) und einen Rücklaufkanal (32) aufweist, welche an ihren gegenüberliegenden Enden über je einen gebogenen Umlenkkanal (24) miteinander verbunden sind, wobei der Tragabschnitt (23) von einer sich in eine Längsrichtung (11) erstreckenden Wagenlaufbahn (41) am Führungswagen und einer Schienenlaufbahn (12) an der Führungsschiene (10) begrenzt wird, wobei wenigstens eine sich in Längsrichtung (11) erstreckende Längsdichtlippe (84) vorgesehen ist, welche so angeordnet ist, dass sie in Dichteingriff mit der Führungsschiene (10) steht, wenn der Führungswagen (20) auf der Führungsschiene (10) montiert ist,
**dadurch gekennzeichnet, dass** wenigstens ein gesondertes Wälzkörperführungsteil (80) vorgesehen ist, welches einstückig aus einem Elastomer besteht, wobei das Wälzkörperführungsteil (80) zwei Umlenkabschnitte (85) aufweist, zwischen denen wenigstens ein sich in Längsrichtung (11) erstreckender Führungsabschnitt (83) einstückig am Wälzkörperführungsteil (80) vorgesehen ist, wobei an dem Führungsabschnitt (83) eine zugeordnete Längsdichtlippe (84) zumindest abschnittsweise angeordnet ist, wobei an den zwei Umlenkabschnitten (85) jeweils wenigstens eine radial innere Umlenkoberfläche (81) eines Umlenkkanals (24) angeordnet ist,
wobei ein gesonderter Hauptkörper (30) aus Metall vorgesehen ist, wobei die Wagenlaufbahn (41) an einer gesonderten Laufbahneinlage (40) angeordnet ist, wobei die Laufbahneinlage (40) zwei gegenüberliegende erste Längsstirnflächen (42) aufweist, die an einem zugeordneten Umlenkabschnitt (85) des wenigstens einen Wälzkörperführungsteils (80) anliegen,
wobei die Laufbahneinlage (40) unter Vorspannung zwischen den Umlenkabschnitten (85) des zugeordneten Wälzkörperführungsteils (80) aufgenommen ist.

2. Führungswagen nach Anspruch 1,
wobei zwei Endkappen (50) vorgesehen sind, an denen wenigstens eine radial äußere Umlenkoberfläche (51) eines Umlenkkanals (24) angeordnet ist, wobei die beiden Umlenkabschnitte (85) des wenigstens einen Wälzkörperführungsteils (80) jeweils in einer zugeordneten Endkappe (50) aufgenommen sind.

3. Führungswagen nach Anspruch 2,
wobei die Längsdichtlippe (84) an dem wenigstens einen Führungsabschnitt (83) in einer Flucht an wenigstens einer Endkappe (50) fortgesetzt ist.

4. Führungswagen nach einem der vorstehenden Ansprüche,
wobei parallel zur Längsdichtlippe (84) ein Haltevorsprung (86) an dem wenigstens einen Führungsabschnitt (83) angeordnet ist, wobei der Haltevorsprung (86) dazu ausgebildet ist, die zugeordneten Wälzkörper (21) im Führungswagen (20) zu halten, wenn sich dieser nicht auf der Führungsschiene (10) befindet.

5. Führungswagen nach einem der vorstehenden Ansprüche,
wobei das wenigstens eine Wälzkörperführungsteil (80) genau zwei Führungsabschnitte (83) aufweist, wobei die beiden Umlenkabschnitte (85) jeweils zwei radial innere Umlenkoberflächen (81) aufweisen, die zwischen den beiden Führungsabschnitten (83) angeordnet sind.

6. Führungswagen nach einem der vorstehenden Ansprüche,
wobei der Hauptkörper (30) zwei gegenüberliegende zweite Längsstirnflächen (31) aufweist, wobei die Laufbahneinlage (40) mit wenigstens einer ersten Längsstirnfläche (42) in Längsrichtung (11) über eine zugeordnete zweite Längsstirnfläche (31) des Hauptkörpers (30) übersteht.

7. Führungswagen nach Anspruch 6,
wobei die Umlenkabschnitte (85) jeweils mit einer Anlagefläche (87) an einer zugeordneten zweiten Längsstirnfläche (31) anliegen, wobei die Laufbahneinlage (40) in eine angepasste Ausnehmung (88) des Umlenkabschnitts (85) eingreift.

8. Führungswagen nach einem der vorstehenden Ansprüche,
wobei der Hauptkörper (30) unter Vorspannung zwischen den Umlenkabschnitten (85) des Wälzkörperführungsteils (80) aufgenommen ist.

9. Führungswagen nach einem der vorstehenden Ansprüche,
wobei jeder radial inneren Umlenkoberfläche (81) ein kreisrunder Durchbruch (89) in dem Umlenkabschnitt (85) zugeordnet ist, der Bestandteil des Umlaufkanals (22) ist.

10. Führungswagen nach Anspruch 9,
wobei der Umlenkabschnitt (85) im Bereich des kreisrunden Durchbruchs (89) in Form einer ebenen Platte (60) mit konstanter Dicke ausgebildet ist.

11. Führungswagen nach Anspruch 10, rückbezogen auf Anspruch 6,
wobei die Dicke der ebenen Platte (60) größer als der Überstand der ersten Längsstirnfläche (42) über die zweite Längsstirnfläche (31) ist.

## Claims

1. Guide carriage (20) for use with an elongate guide rail (10), the guide carriage (20) having at least one row of rolling bodies (21) which are received in an associated circulating channel (22), the circulating channel (22) having a load-bearing section (23) and a return channel (32) which are connected to one another at their opposite ends via in each case one curved deflection channel (24), the load-bearing section (23) being delimited by a carriage raceway (41) which extends in a longitudinal direction (11) on the guide carriage and a rail raceway (12) on the guide rail (10), at least one longitudinal sealing lip (84) which extends in the longitudinal direction (11) being provided, which longitudinal sealing lip (84) is arranged in such a way that it is in sealing engagement with the guide rail (10) when the guide carriage (20) is mounted on the guide rail (10), **characterized in that** at least one separate rolling body guide part (80) is provided which is composed in one piece of an elastomer, the rolling body guide part (80) having two deflection sections (85), between which at least one guide section (83) which extends in the longitudinal direction (11) is provided in one piece on the rolling body guide part (80), an associated longitudinal sealing lip (84) being arranged at least in sections on the guide section (83), in each case at least one radially inner deflection surface (81) of a deflection channel (24) being arranged on the two deflection sections (85), a separate main body (30) made from metal being provided, the carriage raceway (41) being arranged on a separate raceway insert (40), the raceway insert (40) having two first longitudinal end faces (42) which lie opposite one another and bear against an associated deflection section (85) of the at least one rolling body guide part (80), the raceway insert (40) being received with prestress between the deflection sections (85) of the associated rolling body guide part (80).

2. Guide carriage according to Claim 1, two end caps (50) being provided, on which at least one radially outer deflection surface (51) of a deflection channel (24) is arranged, the two deflection sections (85) of the at least one rolling body guide part (80) being received in each case in an associated end cap (50).

3. Guide carriage according to Claim 2, the longitudinal sealing lip (84) on the at least one guide section (83) being continued in alignment on at least one end cap (50).

4. Guide carriage according to one of the preceding claims, a holding projection (86) being arranged parallel to the longitudinal sealing lip (84) on the at least one guide section (83), the holding projection (86) being configured to hold the associated rolling bodies (21) in the guide carriage (20) when the latter is not situated on the guide rail (10).

5. Guide carriage according to one of the preceding claims, the at least one rolling body guide part (80) having precisely two guide sections (83), the two deflection sections (85) in each case having two radially inner deflection surfaces (81) which are arranged between the two guide sections (83).

6. Guide carriage according to one of the preceding claims, the main body (30) having two second longitudinal end faces (31) which lie opposite one another, the raceway insert (40) projecting with at least one first longitudinal end face (42) in the longitudinal direction (11) beyond an associated second longitudinal end face (31) of the main body (30).

7. Guide carriage according to Claim 6, the deflection sections (85) bearing in each case with a bearing face (87) against an associated second longitudinal end face (31), the raceway insert (40) engaging into an adapted recess (88) of the deflection section (85).

8. Guide carriage according to one of the preceding claims, the main body (30) being received with prestress between the deflection sections (85) of the rolling body guide part (80).

9. Guide carriage according to one of the preceding claims, each radially inner deflection surface (81) being assigned a circularly round aperture (89) in the deflection section (85) which is a constituent part of the circulation channel (22).

10. Guide carriage according to Claim 9, the deflection section (85) being configured in the form of a flat plate (60) with a constant thickness in the region of the circularly round aperture (89).

11. Guide carriage according to Claim 10, referring back to Claim 6, the thickness of the flat plate (60) being greater than the projecting length of the first longitudinal end face (42) beyond the second longitudinal end face (31).

## Revendications

1. Chariot de guidage (20) destiné à être utilisé avec un rail de guidage allongé (10), le chariot de guidage (20) présentant au moins une série de corps de roulement (21) qui sont reçus dans un canal de circulation associé (22), le canal de circulation (22) présentant une portion de support (23) et un canal de retour (32), lesquels sont connectés l'un à l'autre au niveau de leurs extrémités opposées par le biais d'un canal de renvoi coudé respectif (24), la portion de support (23) étant limitée par un chemin de roulement du chariot (41) s'étendant dans une direction longitudinale (11) au niveau du chariot de guidage et par un chemin de roulement du rail (12) au niveau du rail de guidage (10), au moins une lèvre d'étanchéité longitudinale (84) s'étendant dans la direction longitudinale (11) étant prévue, laquelle est disposée de telle sorte qu'elle soit en prise hermétique avec le rail de guidage (10) lorsque le chariot de guidage (20) est monté sur le rail de guidage (10),
**caractérisé en ce qu'**au moins une partie de guidage séparée (80) pour les corps de roulement est prévue, laquelle est réalisée d'une seule pièce en matériau élastomère, la partie de guidage de corps de roulement (80) présentant deux portions de renvoi (85) entre lesquelles au moins une portion de guidage (83) s'étendant dans la direction longitudinale (11) est prévue d'une seule pièce sur la partie de guidage pour corps de roulement (80), une lèvre d'étanchéité longitudinale associée (84) étant disposée au moins en partie au niveau de la portion de guidage (83), à chaque fois au moins une surface de renvoi radialement intérieure (81) d'un canal de renvoi (24) étant disposée au niveau des deux portions de renvoi (85),
un corps principal séparé (30) en métal étant prévu, le chemin de roulement du chariot (41) étant disposé au niveau d'un insert de chemin de roulement séparé (40), l'insert de chemin de roulement (40) présentant deux premières surfaces frontales longitudinales opposées (42) qui s'appliquent contre une portion de renvoi associée (85) de l'au moins une partie de guidage des corps de roulement (80),
l'insert de chemin de roulement (40) étant reçu avec précontrainte entre les portions de renvoi (85) de la partie de guidage de corps de roulement associée (80).

2. Chariot de guidage selon la revendication 1, dans lequel deux capuchons d'extrémité (50) sont prévus, au niveau desquels est disposée au moins une surface de renvoi radialement extérieure (51) d'un canal de renvoi (24), les deux portions de renvoi (85) de l'au moins une partie de guidage des corps de roulement (80) étant reçues dans un capuchon d'extrémité associé (50).

3. Chariot de guidage selon la revendication 2, dans lequel la lèvre d'étanchéité longitudinale (84) se prolonge au niveau de l'au moins une portion de guidage (83) en affleurement par au moins un capuchon d'extrémité (50).

4. Chariot de guidage selon l'une quelconque des revendications précédentes,
dans lequel une saillie de retenue (86) est disposée parallèlement à la lèvre d'étanchéité longitudinale (84) au niveau de l'au moins une portion de guidage (83), la saillie de retenue (86) étant réalisée de manière à retenir les corps de roulement associés (21) dans le chariot de guidage (20) lorsque celui-ci ne se trouve pas sur le rail de guidage (10).

5. Chariot de guidage selon l'une quelconque des revendications précédentes,
dans lequel l'au moins une partie de guidage des corps de roulement (80) présente exactement deux portions de guidage (83), les deux portions de renvoi (85) présentant à chaque fois deux surfaces de renvoi radialement intérieures (81) qui sont disposées entre les deux portions de guidage (83).

6. Chariot de guidage selon l'une quelconque des revendications précédentes,
dans lequel le corps principal (30) présente deux deuxièmes surfaces frontales longitudinales opposées (31), l'insert de chemin de roulement (40) faisant saillie avec au moins une première surface frontale longitudinale (42) dans la direction longitudinale (11) au-delà d'une deuxième surface frontale longitudinale associée (31) du corps principal (30).

7. Chariot de guidage selon la revendication 6,
dans lequel les portions de renvoi (85) s'appliquent à chaque fois avec une surface d'appui (87) contre une deuxième surface frontale longitudinale associée (31), l'insert de chemin de roulement (40) venant en prise dans un évidement adapté (88) de la portion de renvoi (85).

8. Chariot de guidage selon l'une quelconque des revendications précédentes,
dans lequel le corps principal (30) est reçu avec précontrainte entre les portions de renvoi (85) de la partie de guidage des corps de roulement (80).

9. Chariot de guidage selon l'une quelconque des revendications précédentes,
dans lequel à chaque surface de renvoi radialement intérieure (81) est associé un orifice circulaire (89) dans la portion de renvoi (85), lequel fait partie du canal de circulation (22).

10. Chariot de guidage selon la revendication 9,
dans lequel la portion de renvoi (85) est réalisée dans la région de l'orifice circulaire (89) sous la forme d'une plaque plane (60) d'épaisseur constante.

11. Chariot de guidage selon la revendication 10 lorsqu'elle se rapporte à la revendication 6,
dans lequel l'épaisseur de la plaque plane (60) est supérieure au dépassement de la première surface frontale longitudinale (42) au-delà de la deuxième surface frontale longitudinale (31).
